(19) Europäisches Patentamt

European Patent Office

Office européen des brevets

(11) **EP 1 158 452 A2**

(12) **EUROPEAN PATENT APPLICATION**

(43) Date of publication:
**28.11.2001 Bulletin 2001/48**

(51) Int Cl.⁷: **G06K 7/10**

(21) Application number: **01302871.7**

(22) Date of filing: **28.03.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **31.03.2000 JP 2000098979**

(71) Applicant: **KABUSHIKI KAISHA TOSHIBA
Kawasaki-shi, Kanagawa-ken 210-8572 (JP)**

(72) Inventors:
• **Urano, Takeo, c/o Intellectual Property Division
Minato-ku, Tokyo 105-8001 (JP)**
• **Ikeda, Naru, c/o Intellectual Property Division
Minato-ku, Tokyo 105-8001 (JP)**
• **Sano, Kenji, c/o Intellectual Property Division
Minato-ku, Tokyo 105-8001 (JP)**
• **Takeda, Hiromitsu, c/o Intellectual Property Div.
Minato-ku, Tokyo 105-8001 (JP)**
• **Yamaji, Yoshimi, c/o Intellectual Property Div.
Minato-ku, Tokyo 105-8001 (JP)**
• **Honguu, Yoshinori, c/o Intellectual Property Div.
Minato-ku, Tokyo 105-8001 (JP)**

(74) Representative: **Granleese, Rhian Jane
Marks & Clerk,
57-60 Lincoln's Inn Fields
London WC2A 3LS (GB)**

(54) **Cloth pattern reading apparatus**

(57) An apparatus reading out a pattern (2) formed on a cloth (1), includes a detector configured to detect amounts of vertical movements of a probe (11), the probe (11) held movable in the vertical direction and held to be in contact with the cloth (1) and the pattern (1), and a processor unit configured to process signals of the amounts of vertical movements and obtain pattern data. Another reading apparatus reading out a pattern formed on a cloth, includes an image sensor configured to detect data on brightness corresponding to two-dimensional positions on the cloth pattern, and a processor unit configured to process to select data on one-dimensional brightness in the width direction of the pattern from two-dimensional brightness data and to decode the pattern data based on the selected data.

FIG. 1

EP 1 158 452 A2

**Description**

The present invention relates to a reading apparatus reading out an inconspicuous convex-concave pattern formed on a cloth with, for example, a thread having a similar color to the cloth.

Bar codes are put to many industrial articles circulated on the market nowadays so as to control the quality, circulation and sale of the articles on the on-line basis.

However, a bar code is scarcely printed to a cloth directly. In many cases, a bar code is printed on a tag attached to the cloth at the time of sale because of the nature inherent in the cloth that, if the bar code is printed directly to the cloth, appearance of the cloth is impaired so as to lower the commercial value of the cloth.

The idea itself of attaching a bar code cloth label to the cloth was known to the art. As a matter of fact, a bar code that is woven into a cloth label with a thread and a bar code that is printed on a cloth label have already been proposed. These are usual black-and-white bar codes and are used on the premise that these bar codes can be read with a bar code reader widely used nowadays. The bar code is formed by a thread or by printing because durability to washing is considered to be of a high importance.

However, if a black-and-white bar code is attached to a position that attracts one's attention of a uniform worn by a worker of, for example, service trade, the bar code might give an unpleasant feel to customers. Therefore, it is unavoidable for the bar code to be attached to the backside of the uniform. In this case, however, it is impossible to read out the bar code put to the folded cloth in the circulating step of the cloth, resulting in failure to improve control.

On the other hand, cloth control by putting a bar code to the cloth such as a uniform of a factory or office has begun to be propagated. It has already been demonstrated that the control of the clothes with a computer system is facilitated under the conditions that bar codes can be forcedly attached regardless of feeling of individuals.

Under the situation described above, it is considered possible to control clothes with a computer system without impairing appearance of the clothes, if it is possible to put an inconspicuous bar code to the clothes such that the color of the bar code is substantially equal to that of the clothes and if it is possible to read out the particular bar code.

Based on the particular idea, the present inventors have previously proposed, in U.S. Patent Nos. 5,971,276 and 6,168,081, apparatuses in which a bar code made of a polyacrylonitrile thread is formed on a cloth, and infrared light generated from the thread when the bar code is heated is read out. In this case, it is possible to form a bar code by using a thread having a color substantially equal to that of the cloth within the visible region and, thus, not attracting attentions so as not to cause a problem in respect of appearance. In addition, it is possible to read out the bar code using invisible infrared light. In these apparatuses, however, it is necessary to use a special infrared detector, giving rise to the problem that the reading apparatus is rendered somewhat costly.

An object of the present invention is to provide an apparatus simple in construction and low in cost, which permits reading out pattern data from a cloth having an inconspicuous convex-concave pattern formed thereon.

According to a first aspect of the present invention, there is provided a contact type cloth pattern reading apparatus reading out a convex-concave pattern formed on a cloth, comprising: a detector configured to detect amounts of vertical movements of a probe, the probe held movable in the vertical direction and held to be in contact with the cloth and the pattern; and a processor unit configured to process signals of the amounts of vertical movements and obtain pattern data.

According to a second aspect of the present invention, there is provided an optical cloth pattern reading apparatus reading out a convex-concave pattern formed on a cloth, comprising: a light source configured to apply light crossing the pattern to the pattern-formed cloth; a detector configured to detect deviation of reflected light from linearity, the deviation of the reflected light is caused by an edge step of the pattern; and a processor unit configured to process the detected signals to decode pattern data.

According to a third aspect of the present invention, there is provided a cloth pattern reading apparatus reading out a pattern formed on a cloth, comprising: an image sensor configured to detect data on brightness corresponding to two-dimensional positions on the cloth pattern; and a processor unit configured to process to select data on one-dimensional brightness in the width direction of the pattern from two-dimensional brightness data and to decode the pattern data based on the selected data.

According to another aspect of the present invention, there is provided a method of reading out a pattern formed on a cloth, comprising: detecting data on brightness corresponding to two-dimensional positions on the pattern; selecting data on one-dimensional brightness in the width direction of the pattern from the two-dimensional brightness data; comparing the selected data with a predetermined threshold value; determining boundary positions of the cloth and the pattern from the data which passes the predetermined threshold value; determining widths of the pattern and the spaces between the adjacent patterns based on the boundary position; correcting the widths of the pattern and the spaces to obtain a reference width or a width of an integer number times of the reference width; and decoding the pattern data based on the corrected widths of the pattern and the space.

According to still another aspect of the present invention, there is provided an apparatus for reading thickness patterns from a cloth and the like, comprising: a light source irradiating at least a portion of thickness patterns of the cloth with a light, the thickness patterns having at least two different thickness regions of the cloth; a detector receiving a reflected light from the thickness patterns of the cloth and generating a signal corresponding to the thickness patterns; and a processor unit receiving the generated signals from the detector and identifying a pattern data corresponding to the thickness patterns of the cloth.

According to still another aspect of the present invention, there is provided an apparatus for reading thickness patterns from a cloth and the like, comprising: a scanner manually scannable the surface of the cloth by a user along with thickness patterns of the cloth, the scanner having a signal generator generating signals representing movements in a perpendicular direction to the surface of the cloth, corresponding to the thickness of patterns of the cloth being scanned; and a processor unit receiving the generated signals and identifying a pattern data corresponding the thickness patterns of the cloth.

The present invention can also be applied to read out a pattern formed on, for example, a nonwoven fabric or bonded fabric as well as on a woven cloth.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a perspective view showing a probe used in a contact type pattern reading apparatus according to one embodiment of the present invention;

FIG. 2 is a cross sectional view showing a probe used in a contact type pattern reading apparatus according to one embodiment of the present invention;

FIG. 3 is a side view showing a probe used in a contact type pattern reading apparatus according to one embodiment of the present invention;

FIG. 4 is a block diagram showing a contact type pattern reading apparatus according to one embodiment of the present invention;

FIG. 5 is a plan view showing a pattern formed with a thread on a cloth;

FIG. 6 is a perspective view showing a locus of light irradiating a cloth having a convex-concave pattern formed thereon;

FIGS. 7A and 7B are a side view and a plan view, respectively, showing arrangement of a light source and a detector used in an optical pattern reading apparatus according to one embodiment of the present invention;

FIG. 8 is a block diagram showing an optical pattern reading apparatus according to one embodiment of the present invention;

FIG. 9 shows signals obtained by a contact type pattern reading apparatus according to one embodiment of the present invention;

FIG. 10 shows signals obtained by an optical pattern reading apparatus according to one embodiment of the present invention;

FIG. 11 is a plan view showing that a cloth and a pattern are in different weave from each other;

FIG. 12A is a cross sectional view showing that a thread forming a pattern is woven through a cloth, and FIG. 12B is a plan view showing that boundaries between the pattern and the cloth are darkened;

FIG. 13 is a block diagram showing an optical pattern reading apparatus according to one embodiment of the present invention; and

FIG. 14A shows plan views of images of regions of a cloth pattern sequentially captured with an image sensor, FIG. 14B shows boundaries between the cloth and the pattern, and FIG. 14C shows a decoded pattern.

First, a pattern on a cloth that is to be detected in the embodiments of the present invention will now be described.

Presently, the standards of the bar code symbol for uniform commodity code are specified in, for example, JIS X 0501. In a black-and-white bar code, it is necessary to increase contrast in order to improve readout accuracy. To be more specific, concerning optical properties of the bar code symbol, contrast value (PCS value), which is determined by the formula: $PCS = (R_L - R_0)/R_L$, where $R_L$ represents reflectance of a base material or margin, and $R_0$ represents reflectance of a bar, is required to be not smaller than a predetermined value in accordance with $R_L$. According to this standard, the PCS value must be 0.583 or more in the case where the reflectance of the margin is, for example, 89.1%. Since such a bar code can be clearly recognized by the naked eye, appearance is markedly deteriorated if the bar code is put to that portion of the cloth that can be seen by the naked eye.

On the other hand, when it comes to a pattern on a cloth that is to be detected in the embodiments of the present invention, the PCS value is not larger than 0.3 and, thus, it is impossible to read out the pattern with an ordinary bar code reader. Also, such a pattern is inconspicuous, unnoticeable or invisible to the naked eye. Therefore, these types of patterns, e.g., bar codes, can be called as "inconspicuous bar code", "unnoticeable bar code" or "invisible bar code". In this case, the appearance of the cloth is not impaired even if the particular pattern is put on a position of the cloth that can be seen from the outside. By contraries, it is possible to form a pattern giving a feel of a high grade by using a bright thread. It suffices for the pattern to be formed of a slight convex-concave configuration on the cloth. For example, it is possible to form a one-dimensional bar code by weaving a thread of a color equal to that of the cloth. It follows that it is possible to attach a bar code to a cloth of any color.

In the present invention, the convex-concave configuration of the pattern is detected and, thus, the material of the pattern, e.g., the thread, is not particularly limited. Incidentally, the pattern is not limited to a one-dimensional bar code. Also, the present invention can be applied to any of the above-mentioned bar code, i. e., "inconspicuous bar code", "unnoticeable bar code" or "invisible bar code". It is possible for the pattern to be a two-dimensional bar code, a two-dimensional symbol or a pattern representing general digital signals.

A contact type reading apparatus according to a first aspect of the present invention will now be described. In this reading apparatus, a probe held movable in the vertical direction is moved relatively in the horizontal direction in the width direction of bars of a bar code pattern formed on a cloth so as to detect amounts of movements of the probe in the vertical direction, and pattern data are decoded based on the amounts of the vertical movements.

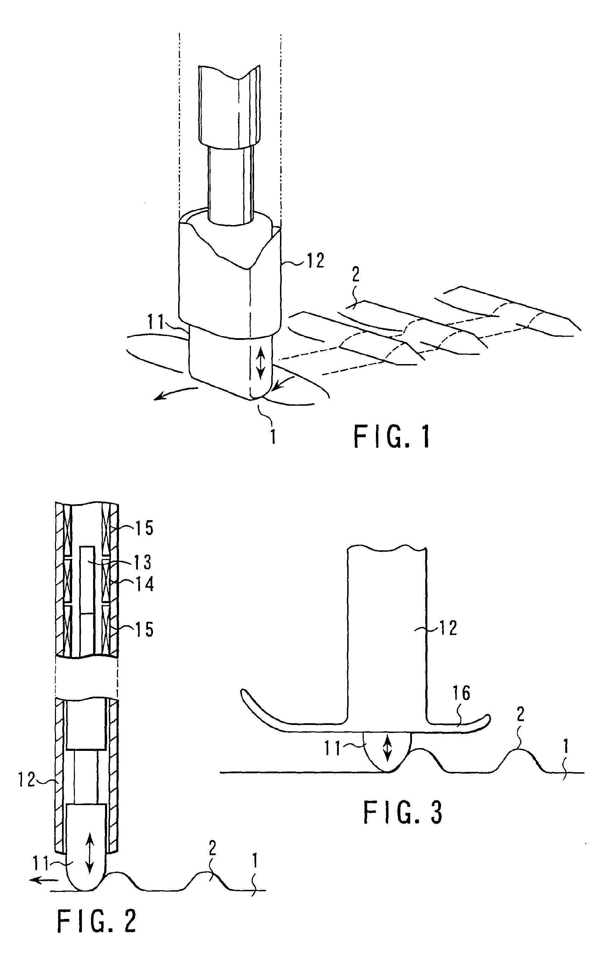

FIG. 1 is a perspective view showing a probe used in an embodiment of the present invention. As shown in FIG. 1, the pattern 2 having a convex-concave configuration so as to form a bar code is formed on the surface of the cloth 1. The probe 11 is held movable in the vertical direction within the holder 12. The probe 11 is held substantially perpendicular to the cloth 1. In this embodiment, the cloth 1 is moved in the horizontal direction as denoted by an arrow so as to permit the probe 11 to cross the bar code pattern in the width direction of the bars. The probe 11 need not be held strictly perpendicular to the cloth 1. It is possible for the probe 11 to be inclined by about 15° depending on the cloth. It is also possible to incline the probe such that the convex-concave configuration on the cloth is projected so as to permit the probe to read out the configuration in a magnified fashion. It is desirable for the probe not to do damage to the pattern. It is also desirable for the probe itself to be resistant to abrasion. It is desirable for the probe to be formed of a polymer material such as nylon or Teflon, a mineral material such as marble, a ceramic material or a metal. It is also desirable for the surface of the probe to be smoothed.

As shown in FIG. 2, the magnetic material 13 is mounted to, for example, the upper portion (proximal end portion) of the probe 11. Also, the primary coil 14 is arranged around the magnetic material 13 and secondary coils 15 are arranged to have the primary coil 14 sandwiched so as to form a differential transformer. If the probe 11 is scanned in contact with the pattern, the probe 11 is moved in the vertical direction in accordance with the height of the pattern. As a result, the position of the magnetic material 13 is changed within the coil so as to induce an AC electromotive force in the secondary coils 15.

The detector detecting displacement of the probe in the vertical direction, i.e., convex-concave configuration, is not limited to the differential transformer. For example, it is possible to detect the convex-concave configuration using a pressure sensor by electrically detecting pressures when the probe contacts a convex portion of the pattern and when the probe contacts a concave portion of the pattern. It is also possible to detect the convex-concave configuration by using an electrostatic capacitance sensor or a magnetostriction sensor.

Since a cloth having a pattern formed thereon is waved in many cases, it is desirable to take measures for holding the cloth in accordance with scanning of the probe. It is possible to hold the cloth, if the holder 12 is partly extended in the direction in which the probe 11 is moved forward so as to form the cloth-holding member 16 the tip portion of which is cambered as shown in FIG. 3. It is also possible to arrange a discrete cloth-holding member forward of the probe such that the cloth is held on the lower surface of the probe before the probe contacts the pattern. Incidentally, it is also possible to arrange a thin cover film, onto which the convex-concave configuration of the pattern can be transferred, on the pattern and to scan the probe on the thin cover film.

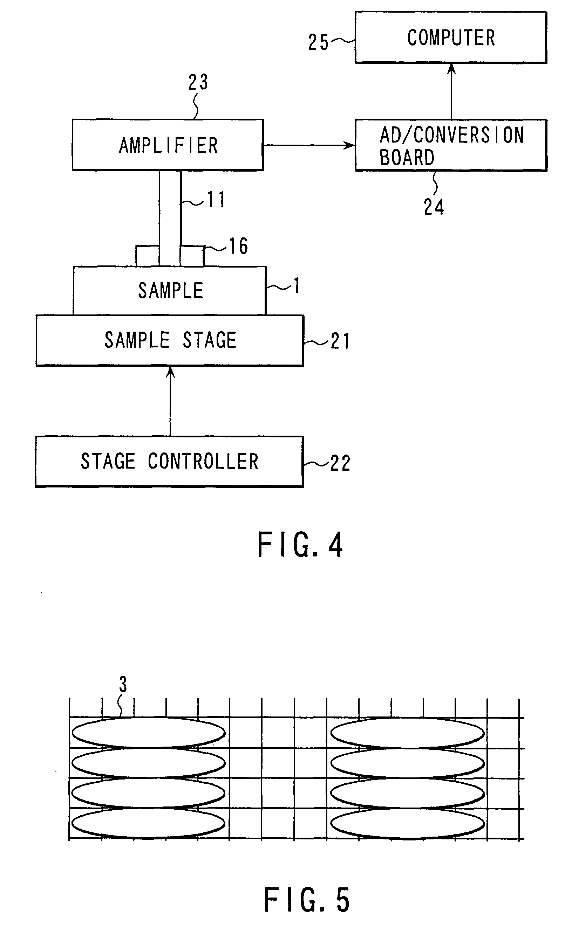

FIG. 4 is a block diagram showing the entire construction of an embodiment of the contact type reading apparatus. As shown in the drawing, the cloth sample 1 having a pattern formed thereon is disposed on the sample stage 21, and the probe 11 is applied to the cloth sample 1 with the cloth sample 1 held by the cloth-holding member 16. The sample stage 21 can be moved with the stage controller 22 in the horizontal direction along the width of bars of the pattern. The probe 11 is moved in the vertical direction in accordance with the local difference in height of the pattern, and thus electromotive force is generated in the differential transformer shown in FIG. 2. The electromotive force is amplified with the amplifier 23. The amplified signals are supplied to the AD conversion board 24. Further, the signals are converted into binary values for every moving distance based on the threshold value set appropriately in the computer (processing unit) 25 so as to convert the signals into bar widths and space widths, followed by being decoded. As the decoding method, it is possible to use the method disclosed in, for example, U.S. Patent No. 6,168,081, the entire contents of which are incorporated by reference.

A reading apparatus of another embodiment of the present invention includes a scanner and a processor unit. The scanner is configured to be manually scannable on the surface of the cloth by a user, along with patterns formed on the cloth. The scanner has a signal generator generating signals representing movements in a perpendicular direction to the surface of the cloth, corresponding to the thickness of patterns of the cloth being scanned. The processor unit receives the generated signals and identifies a pattern data corresponding the thickness patterns of the cloth.

The pattern on the cloth has several characteristics differing from those of a pattern formed on a paper sheet or a card. The pattern formed with using, for example, a thread will now be described. FIG. 5 shows a pattern formed of a weft for defining the width of the bar. In such a pattern, nonuniformity is generated in the vertical direction (longitudinal direction of the bar) with the thickness of the thread as a unit. The thread is not a rigid body having a uniform thickness but a flexible and nonuniform article prepared by stranding thinner fibers. The thickness of the thread is defined by a weight per unit length (constant length, denier, decitex) or by a length per unit weight (constant weight, yarn number count).

The average thickness of a thread is calculated herein by the formula given below for the purpose of comparison with the widths of the probe and the pattern:

$$r = (D \times 10^3/A\pi d)^{1/2}$$

where r represent the thickness of the thread by $\mu$m, D represents the thickness of the thread represented by denier or decitex, A is a constant, which is 9 in the case of denier and 10 in the case of decitex, and d represents density (g/cm$^3$) of the thread.

Where the tip of the probe is small, compared with the thickness of the thread, e.g., where the tip portion of the probe is about 10% of the thickness of the thread, the tip portion of the probe sinks in the thread, making it difficult to maintain the probe on the surface of the bar. On the other hand, where the tip of the probe has a size substantially equal to the width of the bar, it is impossible to obtain a spatial resolution required for correctly reading out the pattern, with the result that signals in which boundaries between bars and spaces are blurred are provided. Such being the situation, it is desirable to take an appropriate measure in respect of the shape of the tip portion of the probe in order to read out correctly the pattern formed by a flexible and nonuniform thread.

In order to prevent the tip portion of the probe from sinking in the thread, it is desirable for a tip portion of the probe to be in contact with the pattern to be flat and for the length of the flat portion in the moving direction of the probe to fall within a range of between 5% and 100% of the width of the pattern. If the length of the flat portion in the moving direction of the probe is unduly large, it is impossible to read out clearly the boundaries of the pattern. The length of the flat portion of the tip portion of the probe in the moving direction of the probe can also be defined in terms of the thickness of the thread. Specifically, it is desirable for the length of the flat portion noted above to fall within a range of between 15% and 300% of the average thickness of the thread forming the pattern.

It is not absolutely necessary for the flat portion at the tip of the probe to be uniform. For example, it is possible for the flat portion to include a concave portion. In this case, it is desirable for the total area of the flat portion in the tip of the probe to fall within a range of between 0.25% and 50% of the square of the pattern width. In terms of the thickness of the thread, it is desirable for the total area of the flat portion in the tip of the probe to fall within a range of between 2.25% and 450% of the square of the average thickness of the thread forming the pattern. However, it is not desirable for the flat portion in the tip of the probe to include a convex portion like the probe used in an ordinary contact diagnostic apparatus because, when the probe is scanned on the thread, the tip portion of the probe catches the thread so as to do damage to the pattern.

The load applied to the probe is adjusted by the degree of the convex-concave configuration of the pattern and by the scanning velocity of the probe. The scanning velocity V (mm/second) of the probe is determined based on the length L (mm) of the probe flat portion in the moving direction of the probe and the time constant T (second) of the apparatus, by the formula:

$$V \leqq L/4T.$$

The maximum scanning velocity determined by the formula given above does not limit the actual scanning velocity. It should be noted in this connection that the signals obtained under the scanning velocity higher than the maximum scanning velocity are distorted in the frequency direction so as to possibly give rise to errors when the signals are converted into the data on the widths of the pattern. However, the signals can be correctly decoded by correcting the distortion in the frequency direction by signal processing.

Incidentally, in the apparatus of the present invention, it suffices to change the relative positions of the probe and the sample, with the result that the probe can be moved. In this case, it is possible to use a probe having the mechanical mouse improved to permit the probe to detect the moving amounts in the horizontal direction and the moving amounts in the vertical direction.

In the case of using an apparatus like a mechanical mouse, a tip portion of the probe to be in contact with the pattern has a cross section forming a part of an arc in the moving direction of the probe like, for example, a mouse ball. It is possible to read out the pattern if the curvature of the tip portion ranges between 5% and 3000% (30 times), preferably 1000% (10 times), of the width of the pattern.

The above description covers the case where the measurement is performed while scanning a single probe that is small compared with the pattern in order to detect the convex-concave configuration of the pattern. In addition, it is possible to read out a two-dimensional symbol by arranging a plurality of probes to form a planar configuration.

Next, an optical reading apparatus according to a second aspect of the present invention will now be described. In this reading apparatus, a pattern on a cloth is irradiated with light such that the light crosses the pattern in the width direction. Then, deviation of the reflected light from linearity, which is caused by the step of the pattern, is detected and the detected signals are processed to decode pattern data.

For example, a laser beam with small divergence, which is emitted from a light source such as a diode laser, is scanned in the width direction of bars of a bar code so as to detect light reflected from the sample. In this case, the incident light and the reflected light are allowed to have a predetermined angular relationship, and the deviation of the reflected light from the linearity, which is caused by the step of the pattern, is detected.

It is possible to perform detection by using a detector of a single element or by using a multi-channel detector in which the elements are integrated to form a planar structure. In the case of using a single element, the positions of the light source and the detector are fixed, and the sample is moved so as to read out the reflected light in each position. In the case of using a multi-channel detector, light is scanned with, for example, a polygon mirror, and detection by the detector is continued during the scanning so as to obtain intensity of the reflected light in each position as a single image. In the case of using a linear light source, the light need not be scanned.

It is also possible to detect the deviation of the reflected light from the linearity, which is caused by the step of the pattern, by using an improved optical mouse.

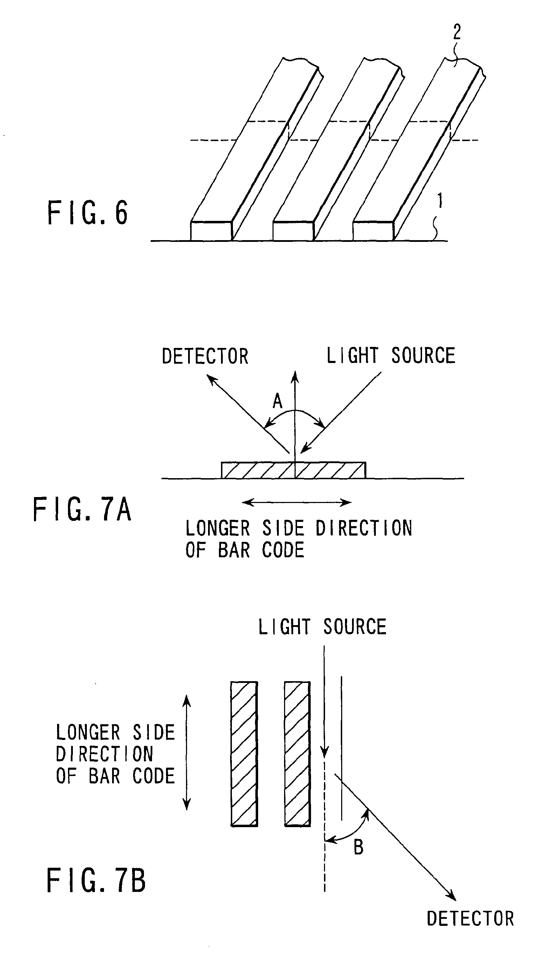

The detected intensity of the reflected light differs depending on the physical convex-concave configuration. In addition, difference in reflectance of the material in each position is added to the difference in the detected intensity of the reflected light. Suppose a three dimensional pattern formed on a cloth is irradiated with light from an oblique position inclined by certain angles from the vertical direction, and reflected light is detected in an oblique position inclined by certain degrees relative to the incident light. A locus of incident light is depicted as a broken line in FIG. 6. If the reflected light is observed, the image of the reflected light on the pattern 2 is detected in a position deviated from the straight line of the image of the reflected light on the cloth 1 in which the pattern 2 is not formed. It follows that it is possible to read out the widths of bars and spaces from the image, making it possible to decode the signals into the original data.

In order to measure clearly the convex-concave configuration of the pattern, it is desirable to set appropriately the angle between the light source and the detector so as to permit observation of the boundaries of the convex-concave configuration. FIGS. 7A and 7B show positional relationships between the light source and the detector. Specifically, FIG. 7A shows the state that the incident light from the light source to the sample and the reflected light from the sample to the detector are projected on a plane perpendicular to the sample. On the other hand, FIG. 7B shows the state that the incident light from the light source to the sample and the reflected light from the sample to the detector are projected on the sample surface. In an embodiment of the present invention, it is important to adjust angles A and B shown in FIGS. 7A and 7B, respectively, to meet the conditions that the angle A shown in FIG. 7A, which is formed between the incident light from the light source and the reflected light to the detector, is not 0° (A ≠ 0°), and that the angle B shown in FIG. 7B, which is formed between the incident light from the light source and the reflected light to the detector, is not 90° (B ≠ 90°).

Where the angle A is not 0° and the angle B is 0°, it is possible to observe the bars and spaces as discontinuous straight lines, though it is impossible to observe the boundary portions. The maximum value of the angle A is defined by the angle at which the lower end of the detector is in contact with the sample. In order to permit the image of the reflected light, which is detected by the detector, to be observed under the state that the image is deviated from the linearity because of the convex-concave configuration of the pattern, it is desirable for the incident light to be converged in a linear state finer than the height of the convex-concave configuration. For example, where the convex-concave configuration has a height of 100 μm, the incident light should be converged to form a line having a width of about 70 μm.

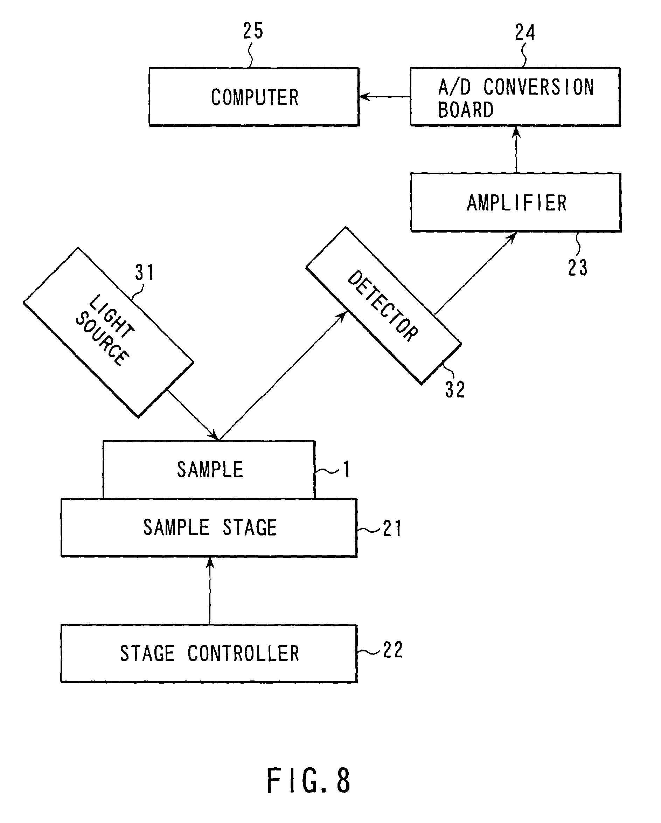

FIG. 8 is a block diagram showing the entire construction of an optical reading apparatus of an embodiment of the present invention. As shown in the drawing, the cloth having a pattern formed thereon is disposed as the sample 1 on the sample stage 21, which is made horizontally movable in the width direction of the pattern with the stage controller 22. The cloth sample 1 is irradiated with light emitted from the light source 31, and light reflected from the cloth sample 1 is detected with the detector 32. The detection signals are amplified in the amplifier 23. The amplified signals are supplied to the AD conversion board 24. Further, the signals are converted into binary values for every moving distance based on the threshold value set appropriately in the computer (processing unit) 25 so as to convert the signals into widths of the bars and spaces, followed by being decoded.

Even in the case where the sample does not have a convex-concave configuration and the bars and spaces differ from each other in light reflectance, it is possible to read out the sample as a bar code by irradiating with a linear light ray and measuring intensity of reflected light at each position. In this case, a pattern of high and low intensities appears with the image of the reflected light left as a straight line. It is desirable to select as the light used the wavelength causing the difference in reflectance to appear prominently. In the case of using a material whose wavelength dependency of reflectance is unclear, it is desirable to use a white light that the spectrum is spread over the entire visible light region. In order to read out correctly the sample having the PCS value not larger than 0.3 under the white condition in which reflectance is about 90%, it is desirable to emphasize the difference in intensity of the reflected light by AC coupling amplification or to correct background light by image processing so as to permit the contrast to be read out.

Since the cloth sample is formed of an aggregate of fibers and unintentional convex-concave configuration is superposed with an intentionally formed pattern, it is desirable to provide a data processing unit for correction. In the case of a three dimensional pattern, noises derived from the cloth appears on the side of high frequency, compared with signals derived from the pattern. It follows that it is possible to improve a readout ratio by providing a filter for cutting the high frequency or by decoding the signals after smoothing treatment for removing the noises.

Next, a reading apparatus according to a third aspect of the present invention will now be described. The reading apparatus comprises an image sensor an image sensor detecting data on brightness corresponding to two-dimensional positions on the cloth pattern, and a processor unit processing the two-dimensional brightness data so as to select data on one-dimensional brightness in the width direction of the pattern from two-dimensional brightness data and to decode the pattern data based on the selected data.

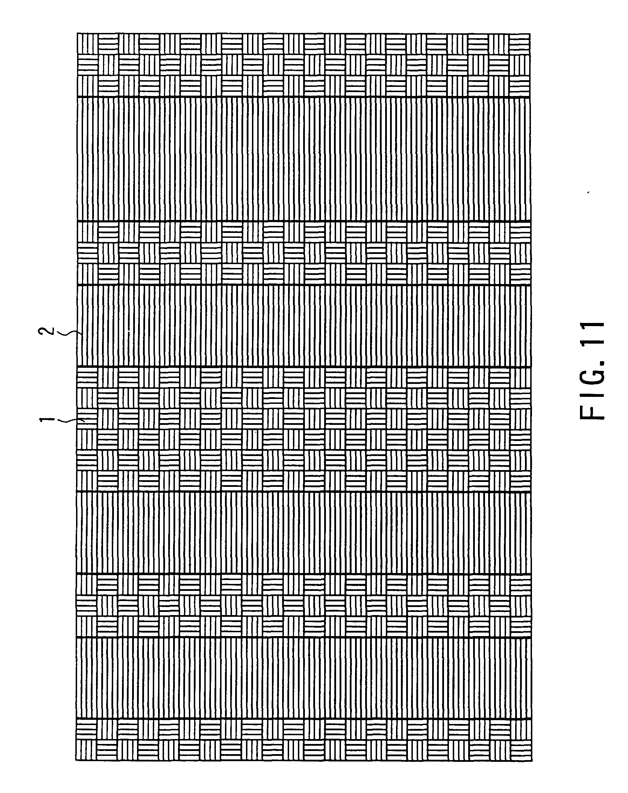

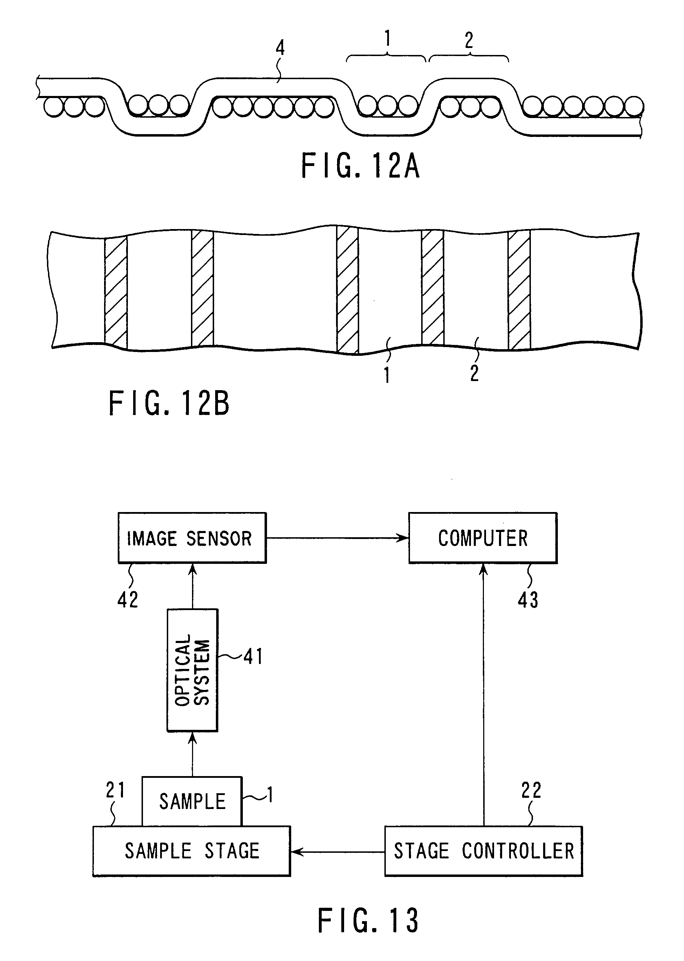

The apparatus utilizes the phenomenon that, in the brightness data on the cloth and the pattern detected by the image sensor, boundaries between the cloth and the pattern are observed dark. FIG. 11 exemplifies a pattern on a cloth. In this drawing, the pattern 2 is formed by satin weave on the cloth 1 formed by plain weave. In the portion of the cloth 1, the threads are stretched both in the vertical and lateral directions, and the portion of the pattern 2 is formed of the weft. As apparent from the cross sectional view shown in FIG. 12A, the weft 4 forming the pattern 2 upheaves on the cloth 1 so as to form the pattern 2, and is positioned below the cloth 1 in the space portion between the adjacent patterns 2. As a result, the weft 4 is stretched oblique in the boundaries between the cloth 1 and the pattern 2. If the brightness (reflected light) of each of the cloth 1 and the pattern 2 is detected by an image sensor, the boundaries between the cloth 1 and the pattern 2, in which the weft 4 is stretched oblique, is observed as dark portions, as shown in the plan view in FIG. 12B.

Readout of the cloth pattern based on the principle described above is carried out as follows. In the first step, data on brightness corresponding to two-dimensional positions on the cloth pattern are detected with an image sensor. Then, one-dimensional brightness data in the width direction of the pattern are selected from the resultant two-dimensional brightness data. The one-dimensional brightness data thus selected are compared with a predetermined threshold value so as to obtain the dark portion and, thus, to determine the boundary positions between the cloth and the pattern. Actually, darkened portions of the boundaries between the cloth and the pattern appear in a waved form in the image as is understood from FIG. 5. Correspondingly, the dark values compared to the threshold value have a certain width. Therefore, a boundary position between the cloth and the pattern is determined as an average position based on the dark values. Then, the widths of the patterns (bars) and the spaces between the two adjacent patterns are determined based on the boundary positions thus determined. Further, the widths of the patterns and the spaces between the two adjacent patterns are corrected so as to be represented by a reference width or by a value an integer number times as much as the reference width. Still further, pattern data are decoded based on the corrected widths of the patterns and the spaces between the adjacent patterns.

FIG. 13 is a block diagram showing an optical pattern reading apparatus according to an embodiment of the present invention. As shown in the drawing, a cloth having a pattern formed thereon is disposed as the sample 1 on the sample stage 21, which can be moved horizontal in the width direction of the pattern by the stage controller 22. The data on brightness of the sample 1 is captured with an image sensor 42 through an optical system 41 so as to be supplied to the computer (processing unit) 43. The positional data controlled by the stage controller 22 are also supplied to the computer 43. As a result, it is possible to provide two-dimensional brightness data on the sample 1. One-dimensional brightness data in the width direction of the pattern is selected from the two-dimensional brightness data thus obtained so as to obtain dark portions and, thus, to determine boundary positions between the cloth and the pattern. The widths of the patterns and the spaces between the adjacent patterns are determined based on the boundary positions thus determined. Then, the widths of the patterns and the spaces between the two adjacent patterns thus obtained are corrected so as to be represented by a reference width or by a value an integer number times as much as the reference value. Further, the pattern data are decoded based on the corrected widths of patterns and spaces between the adjacent patterns.

In order to obtain the brightness data of the cloth pattern with a sufficiently high resolution, used is the image sensor 42 having at least $16 \times 16$ pixels. Magnification M of an image formed on the light-receiving surface of the image sensor 42 with the optical system 41 is set to meet the condition of:

$$S_p/r < M < S_p/r_f$$

where r represents a thickness (μm) of a thread forming the pattern, $r_f$ represents a thickness (μm) of a fiber forming the thread, and Sp represents a size (μm) of one pixel of the image sensor.

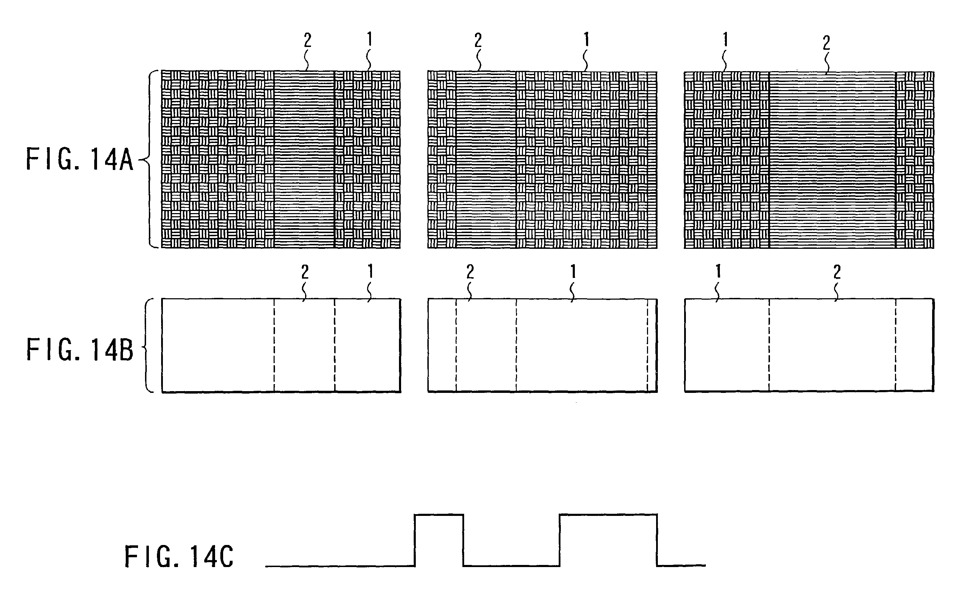

Where the data on a certain region alone of the sample is obtained by the image sensor 42, images of the cloth pattern including at least one boundary between the cloth and the pattern are sequentially captured while relatively moving the cloth pattern and the image sensor 43, and a plurality of images are formed into a composite image by aligning the boundaries between the cloth and the pattern to detect the brightness data corresponding to the two-dimensional positions on the cloth pattern. In this case, it is desirable for the image capturing rate performed by the image sensor 43 to be at least 100 frames/sec. FIG. 14A shows plan views of images of regions of a cloth pattern sequentially captured with an image sensor. FIG. 14B shows boundaries between the cloth and the pattern. FIG. 14C shows a decoded pattern.

In order to obtain data that can clearly distinguish the boundaries between the cloth and the pattern, it is desirable for the relative moving speed V (mm/sec) of the cloth pattern to fall within the range defined below:

$$10^{-6} \times WNc \leqq V \leqq 5 \times 10^{-4} \times WNc$$

where Nc represents a number of captured images per second, and W represents a reference width (μm) of the cloth pattern.

If a pattern having a different reflectance is read out with a planar detector, a periodic distortion of the straight line and the high and low light intensities of different period are observed. In this case, signals having the intensity distribution corrected by the distortion of the straight line are decoded.

It is desirable to confirm whether or not a cloth label having a pattern formed thereon is correctly formed before the cloth label is attached to an article. Since the cloth has a low density, light can be transmitted through the cloth. For example, in the case of forming a bar code by weaving a thread on the cloth, the thread is present on the front side in the bar portion and on the backside in the space portion and, thus, the thickness is the same. However, in the boundary portions between the bar portions and the space portions, the thickness is decreased in the portions where the cloth and the thread cross each other so as to increase light transmittance. Under the circumstances, it is possible to evaluate whether or not the bar code is formed correctly by measuring the intensity of the transmitted light for each position.

If a three dimensional pattern is made visible, it is possible to use a cheap detector for the visible light. As a means for visualizing the pattern, a sheet having a material exhibiting fluidity such as liquid or powder sealed therein is applied to the upper surface of the pattern. Since a pattern of different optical densities is generated in the fluid in accordance with the convex-concave configuration of the pattern, it is possible to read out the position and width of the convex-concave configuration by detecting the pattern.

It is possible to attach the cloth pattern of the embodiments of the present invention to various uniforms such as the white clothes of the doctors or nurses, the workers' clothes in the factory, team uniforms of the athletes, the uniforms of the workers of the service trade such as hotels, the uniforms of the workers in the transportation company, or the uniforms of the public servants such as the firemen or policemen. It is also possible to attach the cloth pattern to the other cloth articles such as the linen of the hotel such as sheets, bed covers, towels, bath towels, and pillowcases, the linen for the railroad such as the head rest covers, the linen for the party such as the table cloths, the cloth bags used for the packaging, the tents, and the sails of the yachts. Also, much demands for the cloth pattern are expected in the rental diapers and in the cloth articles for the aged persons. The cloth pattern can also be attached to the shoes, the hats and the gloves.

If a bar code, a two-dimensional symbol or other code pattern is formed by a thread on such a cloth, it is possible to utilize the cloth pattern in various control with an computer system such as circulation control and stock control, and further in network control system. It is also possible to utilize the cloth pattern for preventing forgery. For example, if a cloth nameplate is woven in a uniform of a medical worker and a cloth bar code is attached to the uniform, it is possible to use the cloth bar code for the personal identification. Also, the cloth bar code is not obstructive like the name card when the medical worker treats a patient.

Embodiment 1:

A bar code was woven on a polyester-based white cloth ribbon with a white acrylic embroidery thread (300 deniers, two ply yarn) by using a ribbon-weaving machine (bonnaz). The bar code was a code having a basic width of 660 μm in accordance with ITF and representing a number of six figures of 010191. It was impossible to read out the sample using an ordinary optical bar code reader.

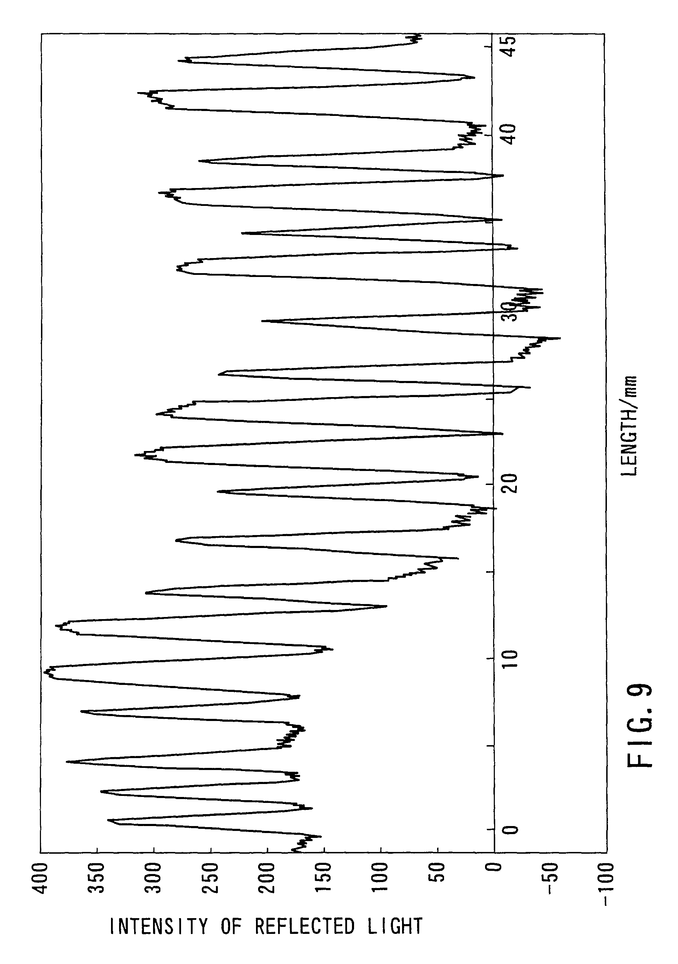

As shown in FIG. 4, the sample was held on a constant-speed stage, and a probe was pressed against the sample. The probe was made of nylon and had a width of 3 mm, a height of 1.5 mm and a thickness of 2 mm. The tip portion of the probe was processed to have a U-shaped cross section and had a curvature radius of 50 μm. The sample on the constant-speed stage was moved in the width direction of the bar at a speed of 10 mm/second. A core magnetic material of a differential transformer was attached to an upper portion of the probe. Therefore, when the probe was scanned along the bar code, voltage was generated in accordance with the convex-concave configuration of the bar code. The signal voltage was amplified in a preamplifier and, then, supplied to the AD conversion board. The data as shown in FIG. 9 were obtained when the voltage value at each position was taken in as signals while moving the sample. The data were converted into binary values by setting a suitable threshold value. When the binary data were decoded, it was possible to obtain the correct numeral of 010191.

For comparison, measurement was attempted under the same conditions by attaching as a probe a needle type probe having a V-shaped tip portion (stainless steel, tip portion of 15 μm). In this case, the thread was caught with the probe so as to move the position of the sample, resulting in failure to perform measurement. Then, measurement was attempted again by strongly holding the sample on the stage, with the result that the pattern was damaged.

Embodiment 2:

A bar code was woven in an acrylic white cloth ribbon (75 deniers, two ply yarn) with a white acrylic embroidery thread (150 deniers, two ply yarn). The bar code was a code having a basic width of 660 μm in accordance with ITF and representing a number of six figures of 010191. The upper half of the bar code region was dyed with black cationic dye. It was impossible to read out the sample using an ordinary optical bar code reader.

The sample was read out using a reading apparatus similar to that used in Embodiment 1. It was possible to read out correctly both the dyed portion and the portion that was not dyed.

Embodiment 3:

A bar code was woven in an acrylic white cloth ribbon (75 deniers, two ply yarn) with a white acrylic embroidery thread (300 deniers, two ply yarn) by using a ribbon-weaving machine (bonnaz). The bar code was a code having a basic width of 660 μm in accordance with ITF and representing a number of six figures of 010191.

The scanning velocity was set at 10 mm/sec, 20 mm/sec and 30 mm/sec by using a reading apparatus similar to that used in Embodiment 1. The sample was read out correctly when the scanning velocity was set at 10 mm/sec. However, readout errors partly took place when the scanning velocity was 20 mm/sec or more.

Under the circumstances, a cloth-holding member was attached to the reading apparatus similar to that used in Embodiment 1. In this case, readout errors did not take place even if the scanning velocity was set at 20 mm/sec or more.

Embodiment 4:

A nylon ribbon was mounted to a thermal transfer printer, and printing was performed with a thermal head adjusted such that an instantaneous temperature reached 500°C. A linear figure or the like was used as a printing pattern. Since the molten portion of the nylon ribbon forms a convex portion, the ribbon can be used as a model of the bar code. When the micrograph was observed, the basic width was found to be 660 μm, and the depth was found to be about 100 μm.

The sample was read out using a reading apparatus similar to that used in Embodiment 1. It was possible to read out the bar code pattern as binary data.

Embodiment 5:

A punch heated to 200°C was pressed against a black polyester cloth so as to form holes each sized 3 mm $\times$ 10 mm, the holes being formed 2 mm apart from each other to provide a model of a bar code pattern. Incidentally, when a punch, which was not heated, was used, it was impossible to form holes in the polyester cloth. The polyester cloth having the holes made therein was woven to a black cotton cloth so as to provide a bar code model.

The sample was read out using a reading apparatus similar to that used in Embodiment 1. It was possible to read out the bar code pattern as binary data. It should be noted, however, that, where the periphery of the punched cloth was simply sewn, the probe was caught in some cases. Therefore, the pattern was read out more satisfactorily in the case where the punched cloth was adhered on the entire surface.

Embodiment 6:

A bar code was woven in a polyester-based white cloth ribbon with a white acrylic embroidery thread (300 deniers, two ply yarn) by using a ribbon-weaving machine (bonnaz). The bar code was a code having a basic width of 660 μm in accordance with ITF and representing a number of six figures of 010191. It was impossible to read out the sample using an ordinary optical bar code reader.

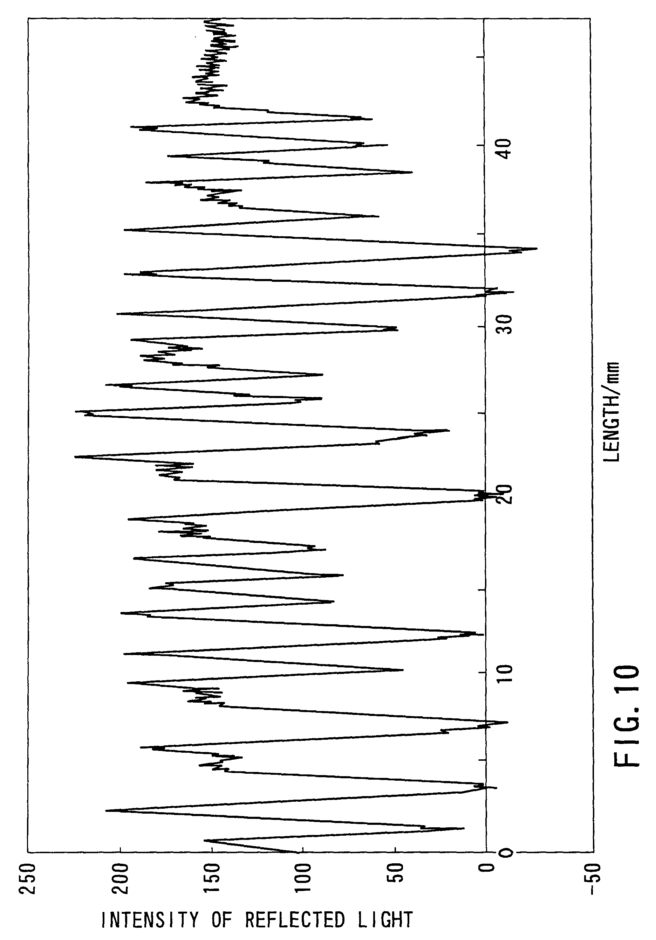

As shown in FIG. 8, the sample was held on a constant-speed stage. While moving the sample on the constant-speed stage at a speed of 10 mm/sec in the width direction of the bar, the sample was irradiated with white light emitted from a halogen lamp and transmitted through an optical fiber in a direction of 75° from the vertical direction. The sample was irradiated with the white light along the longer side of the bar code, and reflected light intensity was detected at each position with a detector arranged right above the sample. The signal voltage was amplified in a preamplifier and, then, supplied to the AD conversion board. The data as shown in FIG. 10 were obtained when the voltage value at each position was taken in as signals while moving the sample. The data were converted into binary values by setting a suitable threshold value. When the binary data were decoded, it was possible to obtain the correct numeral of 010191.

Embodiment 7:

A bar code was woven in an acrylic white cloth ribbon (75 deniers, two ply yarn) with a white acrylic embroidery thread (150 deniers, two ply yarn). The bar code was a code having a basic width of 660 μm in accordance with ITF and representing a number of six figures of 010191. The upper half of the bar code region was dyed with black cationic dye. It was impossible to read out the sample using an ordinary optical bar code reader.

The sample was read out using a reading apparatus similar to that used in Embodiment 6. It was possible to read out correctly both the dyed portion and the portion that was not dyed.

Embodiment 8:

A bar code was woven in an acrylic white cloth ribbon (75 deniers, two ply yarn) with a white acrylic embroidery thread (300 deniers, two ply yarn) by using a ribbon-weaving machine (bonnaz). The bar code was a code having a basic width of 660 μm in accordance with ITF and representing a number of six figures of 010191. It was impossible to read out the sample using an ordinary optical bar code reader.

A laser beam having a wavelength of 630 nm, which was emitted from a diode laser, was converged on the sample surface via a polygon mirror. In this case, the angle of incident light was set at 60° from the vertical direction, and the light was incident on the sample surface in a direction parallel to the longer side of the bar code. A CCD detector (150 × 150 pixels) was arranged in a direction of 30° from the vertical direction and in a direction of 45° relative to the incident light within the sample plane. While continuously irradiating the sample surface with the diode laser beam, the laser beam was scanned by the polygon mirror such that the light was irradiated across the entire bar code. A single scanning took 50 ms. The image taken in every 50 ms was integrated with the accumulating time of CCD set at 50 ms. The data were converted into binary values by setting a suitable threshold value. When the binary data were decoded, it was possible to obtain the correct numeral of 010191.

Embodiment 9:

On a cloth woven in plain weave using a two ply yarn white polyester fiber of 150 deniers, which was stranded using two single yarns of 75d/38f, a bar code in accordance with Code 39 was woven using a two ply yarn white polyester thread of 200 deniers, which was stranded using two single yarns of 100d/80f. Color difference between the cloth and the bar was 1.8. It was substantially impossible to recognize the color difference by the naked eye. As a matter of fact, it was impossible to read out the sample using an ordinary optical bar code reader.

A laser beam having a wavelength of 630 nm, which was emitted from a diode laser, was converged on the sample surface via a polygon mirror. In this case, the angle of incident light was set at 60° from the vertical direction, and the laser beam was incident on the sample surface in a direction parallel to the longer side of the bar code. A CCD detector (150 × 150 pixels) was arranged in a direction of 30° from the vertical direction and in a direction of 45° relative to the incident light within the sample plane. The convex-concave configuration was read out from the distortion of the reflected light and, after the intensity of the reflected light was corrected, the data were converted into binary values by setting a suitable threshold value. When the binary data were decoded, it was possible to obtain the correct numeral of 010191.

Embodiment 10:

A bar code was woven in a polyester-based white cloth ribbon with a white acrylic embroidery thread (300 deniers, two ply yarn) by using a ribbon-weaving machine (bonnaz). The bar code was a code having a basic width of 660 μm in accordance with ITF and representing a number of six figures of 010191. It was impossible to read out the sample using an ordinary optical bar code reader.

An ethanol solution of an aqueous ink was injected into the spaces between two polyethylene films having a thickness of 50 μm, from which air and the excess solution were removed out, and then the four sides of the laminated polyethylene films were sealed. The resultant sheet was disposed on the sample surface, and the sheet having a smooth surface was rubbed. The convex-concave pattern transferred onto the sheet was detected by a CCD detector (150 × 150 pixels) arranged in the vertical direction of the sample so as to obtain an image in which the ink amount was large in the portion corresponding to the concave portions. Difference in color density was read out as difference in signal intensity. The data were converted into binary values by setting a suitable threshold value. When the binary data were decoded, it was possible to obtain the correct numeral of 010191.

Embodiment 11:

Prepared was a cloth ribbon woven in plain weave using a two ply yarn white polyester thread of 150 deniers stranded by two single yarns of 75d/38f. Also prepared was a two ply yarn white polyester thread of 200 deniers stranded by two single yarns of 100d/80f. Then, bars were woven in satin weave on the cloth ribbon using a ribbon-weaving machine (bonnaz). The bar code was a code having a basic width of 660 µm in accordance with ITF and representing six figures of 010030. The color difference between the cloth and the bar was 1.8, and it was impossible to read out the bar code using an ordinary optical bar code reader.

As shown in FIG. 13, the sample 1, which is held on a holder, is disposed on the sample stage 21. The optical system 41 is provided on the sample 1. The optical system 41 is capable of magnifying the sample 1 with magnification of 100. The image of the sample 1 is detected with the image sensor 42 including CCD. The CCD detector 42 has a size of 6 mm × 8 mm and includes 120 × 160 pixels each having an area of 40 µm × 40 µm. These pixels are arranged at a pitch of 50 µm.

The sample stage 21 having the sample 1 disposed thereon was moved at a constant speed of 10 mm/sec, and images captured at a rate of 1,000 frames/sec to provide data on brightness in two-dimensional positions on the sample. If data on brightness in the central position of the sample in the width direction of the bar are selected, it is possible to obtain intermittently low brightness values. The low brightness value corresponds to the oblique boundary position where the thread forming the bar is woven into the ground cloth. The starting point of the pattern is an edge of the bar providing the start bit. The positions of the low brightness values are obtained using the start point of the pattern as a reference, and the boundaries between the cloth and the pattern are determined. These processes will be described in more detail. The positions of the low brightness values appear regularly in the direction crossing the bars, and exhibits gentle wavy pattern in the direction parallel to the bar. This is because the thread forming the bar is woven at the positions of warp yarns forming the ground cloth and the bars are formed with intervals corresponding to a basic unit forming the ground cloth. The wavy pattern corresponds to the boundary between the ground cloth and the pattern.

Since ITF was used as the code, each of the bar and the space has two kinds of thicknesses. The widths of the bars and the spaces are calculated by applying the widths between the two boundaries obtained as above to the four kinds of widths, finding that the bar is 660 µm wide, and the space is 1,000 µm wide. Binary signals of the entire cloth pattern are obtained by synthesizing 1,000 frames of images in a manner to align the boundary positions. When the binary signals are decoded in accordance with the regulation specified in the ITF code, it is possible to recognize correctly the numeral of 010030.

Incidentally, when the relative moving speed of the sample is set at 500 mm/sec, the boundaries between the cloth and the pattern are made unclear, resulting in failure to recognize correctly the bar code. Also, when the images are captured at a rate of 10 frames/sec, the boundaries between the cloth and the pattern are made unclear even if the moving speed is set at 10 mm/sec, resulting in failure to synthesize images and, thus, to recognize correctly the bar code.

Embodiment 12:

Used were an optical system having magnification of 10 times and CCD having 652 × 486 pixels, each pixel having a size of 8 µm × 8 µm and arranged at a pitch of 10 µm. Images are captured at a rate of 1,000 frames/sec while moving the stage 21 having the sample 1 disposed thereon at a constant speed of 50 mm/sec so as to obtain brightness data on two-dimensional positions on the sample 1.

If the number of pixels of the CCD is increased, it is possible to take in 1/3 to 1/2 of the region of the entire cloth pattern in a single image so as to make it possible to lower the capturing rate. Also, where the positions of the sample and the CCD are appropriately aligned in advance, it is possible to take in the images of the entire cloth pattern at a time, making it possible to perform the measurement without involving the movement. When the obtained data are converted into binary signals and the resultant binary signals are decoded, it is possible to recognize correctly the numeral of 010030.

## Claims

1. A cloth pattern reading apparatus reading out a convex-concave pattern (2) formed on a cloth (1), **characterized by** comprising:

   a detector configured to detect amounts of vertical movements of a probe(11), the probe (11) held movable in the vertical direction and held to be in contact with the cloth (1) and the pattern (2); and
   a processor unit (25) configured to process signals of the amounts of vertical movements and obtain pattern data.

2. The apparatus according to claim 1, **characterized in that** the detector configured to detect the amounts of vertical movements of the probe (11) comprises a differential transformer (13, 14, 15).

3. The apparatus according to claim 1, **characterized in that** a tip portion of the probe (11) has a cross section of a part of arc in the moving direction of the probe (11), the cross section having a curvature radius ranging between 5% and 3000% of the width of the pattern (2).

4. The apparatus according to claim 1, **characterized**

**in that** a tip portion of the probe (11) is flat, and the length of the flat portion in the moving direction of the probe (11) ranges between 5% and 100% of the width of the pattern (2).

5. The apparatus according to claim 1, **characterized in that** a tip portion of the probe (11) is flat, and the length of the flat portion in the moving direction of the probe (11) ranges between 15% and 300% of the average thickness of a thread forming the pattern (2).

6. The apparatus according to claim 1, **characterized in that** a tip portion of the probe (11) is flat, and the total area of the flat portion ranges between 0.25% and 50% of the square of the width of the pattern (2).

7. The apparatus according to claim 1, **characterized in that** a tip portion of the probe (11) is flat, and the total area of the flat portion ranges between 2.25% and 450% of the square of the average thickness of a thread forming the pattern (2).

8. A cloth pattern reading apparatus reading out a convex-concave pattern (2) formed on a cloth (1), comprising:

   a light source (31) configured to apply light crossing the pattern (2) to the pattern-formed cloth (1);
   a detector (32) configured to detect deviation of reflected light from linearity, the deviation of the reflected light is caused by an edge step of the pattern (2); and
   a processor unit (25) configured to process the detected signals to decode pattern data.

9. The apparatus according to claim 8, **characterized in that** the light source (31) emits light converged into a linear beam thinner than a height of the pattern (2), the detector (32) is a two-dimensional detector, and the positions of the light source (31) and the detector (32) satisfy the conditions that an angle A formed between incident light emitted from the light source (31) and reflected light detected by the detector (32), which are projected on a plane perpendicular to the cloth (1), is not 0°, and that an angle B formed between incident light emitted from the light source (31) and reflected light detected by the detector (32), which are projected on the cloth surface, is not 90°.

10. A cloth pattern reading apparatus reading out a pattern (2) formed on a cloth (1), comprising:

    an image sensor (42) configured to detect data on brightness corresponding to two-dimensional positions on the cloth pattern; and

a processor unit (43) configured to process to select data on one-dimensional brightness in the width direction of the pattern from two-dimensional brightness data and to decode the pattern data based on the selected data.

11. The apparatus according to claim 10, **characterized in that** the image sensor (42) comprises at least $16 \times 16$ pixels.

12. The apparatus according to claim 10, further comprising a magnifying optical system (41) arranged between the cloth pattern and the image sensor (42), **characterized in that** magnification M of an image formed on a light-receiving surface of the image sensor (42) with the magnifying optical system (41) meets the condition of:

$$S_p/r < M < S_p/r_f$$

where r represents a thickness ($\mu$m) of a thread forming the pattern, $r_f$ represents a thickness ($\mu$m) of a fiber forming the thread, and $S_p$ represents a size ($\mu$m) of one pixel of the image sensor (42).

13. A method of reading out a pattern (2) formed on a cloth (1), comprising:

    detecting data on brightness corresponding to two-dimensional positions on the pattern;
    selecting data on one-dimensional brightness in the width direction of the pattern from the two-dimensional brightness data;
    comparing the selected data with a predetermined threshold value;
    determining boundary positions of the cloth (1) and the pattern (2) from the data which passes the predetermined threshold value;
    determining widths of the pattern and the spaces between the adjacent patterns based on the boundary position;
    correcting the widths of the pattern and the spaces to obtain a reference width or a width of an integer number times of the reference width; and
    decoding the pattern data based on the corrected widths of the pattern and the space.

14. The method according to claim 13, **characterized in that** images of the cloth pattern of a region including at least one boundary position between the cloth (1) and the pattern (2) are sequentially captured while relatively moving the cloth pattern and the image sensor (42), and a plurality of images are formed into a composite image by aligning the boundaries between the cloth (1) and the pattern (2) to detect the data on the brightness corresponding to the two-dimensional position on the cloth pattern.

15. The method according to claim 13, **characterized in that** the image capturing rate is at least 100 frames/sec.

16. An apparatus for reading thickness patterns from a cloth (1) and the like, comprising:

a light source (31) irradiating at least a portion of thickness patterns of the cloth (1) with a light, the thickness patterns having at least two different thickness regions of the cloth;

a detector (32) receiving a reflected light from the thickness patterns of the cloth (1) and generating a signal corresponding to the thickness patterns; and

a processor unit (25) receiving the generated signals from the detector (31) and identifying a pattern data corresponding to the thickness patterns of the cloth (1).

17. An apparatus for reading thickness patterns from a cloth (1) and the like, the thickness patterns having at least two different thickness regions, comprising:

a scanner manually scannable the surface of the cloth by a user along with thickness patterns of the cloth, said scanner having a signal generator generating signals representing movements in a perpendicular direction to the surface of the cloth, corresponding to the thickness of patterns of the cloth being scanned; and

a processor unit receiving the generated signals and identifying a pattern data corresponding the thickness patterns of the cloth.

FIG. 1

FIG. 2

FIG. 3

FIG. 4

FIG. 5

FIG. 6

2

1

FIG. 7A

DETECTOR          LIGHT SOURCE

A

LONGER SIDE DIRECTION
OF BAR CODE

FIG. 7B

LIGHT SOURCE

LONGER SIDE
DIRECTION
OF BAR CODE

B

DETECTOR

25

COMPUTER

24

A/D CONVERSION BOARD

AMPLIFIER

23

31

LIGHT SOURCE

DETECTOR

32

SAMPLE ~1

SAMPLE STAGE ~21

STAGE CONTROLLER ~22

FIG. 8

FIG. 9

LENGTH/mm

INTENSITY OF REFLECTED LIGHT

EP 1 158 452 A2

FIG. 10

INTENSITY OF REFLECTED LIGHT

LENGTH/mm

EP 1 158 452 A2

FIG. 11

4

1

2

## FIG. 12A

## FIG. 12B

1

2

| IMAGE SENSOR | COMPUTER |

42

43

OPTICAL SYSTEM ~41

21 SAMPLE ~1

22

SAMPLE STAGE ← STAGE CONTROLLER

## FIG. 13

FIG. 14A

FIG. 14B

FIG. 14C